# FASCICULE DE BREVET EUROPEEN

(11) **EP 3 612 621 B1**
(45) Date de publication et mention de la délivrance du brevet: **09.06.2021**
(21) Numéro de dépôt: 17722847.5
(22) Date de dépôt: 18.04.2017
(51) Int. Cl.: C12C 1/13, C12C 1/135, C12C 1/16

(54) **INSTALLATION DE MALTERIE EN CONTINU**
KONTINUIERLICHE MÄLZEREI
CONTINUOUS MALTING PLANT

(43) Date de publication de la demande: 26.02.2020
(73) Titulaire: Passion Malts, 51360 Beaumont sur Vesle (FR)
(72) Inventeur: JULIEN, Denis, 51360 Beaumont-sur-Vesle (FR)
(74) Mandataire: Cabinet Netter
(86) Numéro de dépôt international: PCT/FR2017/050918
(87) Numéro de publication internationale: WO 2018/193168

(56) Documents cités:
- DE-A1- 2 800 184
- DE-A1-102012 200 809
- FR-A- 1 240 053
- GB-A- 2 032 601

## Description

L'invention concerne le maltage.

Le maltage comprend les étapes de trempage afin d'apporter au grain l'humidité nécessaire au déclenchement du processus germinatif, de germination et de touraillage afin de stopper le processus germinatif à un état prédéterminé.

Lors de la germination d'une céréale, le grain développe des enzymes. La céréale utilisée comprend généralement l'orge, le seigle, le sorgho, le blé ou l'épeautre.

La céréale germée est dénommée malt vert. La céréale en sortie de touraille est dénommée malt. Le touraillage par sa température et sa durée permet de régler le degré de touraillage, donc la concentration de certains composés recherchés ou au contraire non souhaités dans le malt.

Les principes généraux du maltage, connus depuis très longtemps, sont décrits dans l'ouvrage "Malterie et Brasserie", de Jean SUNIER, 2ème édition, imprimerie La Concorde, Lausanne, 1968, ou encore dans sa réédition plus récente sous le nouveau titre "La Fabrication de la Bière", Alliage éditeur, 26 septembre 2007, ISBN-13 No. 978-2921327602 GB2032601 divulgue une installation de malterie en continu, comprenant un tunnel de germoir et de touraillage.

Le maltage est réalisé dans des usines appelées malteries. Une malterie typique pour le malt de brasserie a une production de 50 000 à 150 000 tonnes par an et est implantée en un lieu choisi en fonction des bassins de production, des zones de consommation, des voies de transport de marchandises pondéreuses, du prix du terrain, et de l'approvisionnement en eau et en énergie à faible coût.

Un marché de petits volumes existe pour les brasseries artisanales et les fabricants d'alcools de grain, notamment de whiskey.

La Demanderesse a identifié un besoin pour des petits volumes de malts de propriétés au choix du client. Une grande malterie est inadaptée pour fournir de petits volumes de malts de propriétés choisies. Une petite malterie à tonneau ne dispose pas du savoir-faire pour l'obtention de malts de propriétés choisies. Une petite malterie classique de 10 à 1000 tonnes par an est très onéreuse et nécessite de la manutention.

L'invention vient améliorer la situation.

Une installation de malterie en continu comprend un tunnel de germoir ou de touraillage. Ledit tunnel comprend une voie basse et une voie haute superposées, une chaîne d'entraînement du malt pour entraîner du malt en translation dans la voie haute, la voie basse étant une voie de retour de chaîne, la voie basse et la voie haute étant séparées par une grille à ouvertures allongées, la grille supportant la chaîne d'entraînement, la voie basse formant une amenée d'air vers la voie haute à travers la grille et une évacuation de sous produits tombant par les ouvertures de la grille et entraînés par le retour de chaîne en sens opposé au sens d'entraînement du malt, et un panneau amovible de sectionnement de l'amenée d'air monté dans la voie basse au dessus du retour de chaîne.

Les malteries industrielles fonctionnent par lots de grains. Entre deux lots, chaque organe de la malterie est nettoyé. Par exemple, la cuve de trempage est rincée, le germoir est lavé et la touraille est balayée. Au contraire, l'invention propose une malterie en continu. L'installation est ainsi utilisée avec une productivité accrue. Le nombre d'heures de production peut se rapprocher du maximum théorique de 168 heures par semaine. Par ailleurs, la continuité de la production permet de gagner un temps considérable sur la durée des étapes de transfert : silo vers trempage, trempage vers germoir, germoir vers touraille, touraille vers silo. Les temps de transfert deviennent des temps masqués, le germoir en pleine production recevant continûment du grain trempé en entrée et fournissant continûment du malt vert en sortie. Et le tonnage produit rapporté à la surface occupée est élevé.

Par ailleurs, la durée des processus biologiques à l'œuvre en trempage, en germoir et en touraille étant donnés, la vitesse d'avancement au sein du trempage, du germoir et de la touraille est très faible. Il en résulte une usure très faible des organes mécaniques, notamment de la chaîne.

L'installation fonctionne en continu. Le traitement de la céréale et son déplacement de l'amont vers l'aval sont simultanés. Le traitement s'entend du touraillage ou des conditions favorables à la germination.

Dans un mode de réalisation, le panneau de sectionnement présente plusieurs emplacements fixes de montage. Le panneau de sectionnement permet de délimiter des zones de repos et des zones de ventilation, donc des durées de repos et des durées de ventilation.

Dans un mode de réalisation, le panneau de sectionnement est mobile le long de la voie basse, le panneau de sectionnement étant apte à suivre un début, respectivement une fin, de production de malt. Le panneau de sectionnement mobile avec une charge de céréale permet démarrer/terminer une production en assurant l'amenée d'air souhaitée à travers le lit de céréale présent en voie haute. On évite que l'air ne s'échappe par une portion libre de la grille.

Dans un mode de réalisation, l'installation comprend des buses de lavage disposées sur le panneau de sectionnement. Un lavage de la voie haute depuis la voie basse est possible.

Dans un mode de réalisation, le panneau présente une section triangulaire en coupe dans un plan longitudinal avec un sommet de triangle adjacent à la grille et une base de triangle adjacent au retour de chaîne et de longueur supérieure à la distance entre deux barreaux de la chaîne. La forme du panneau permet d'écarter les radicelles et autres sous produits tombant de la grille. Le panneau couvrant deux barreaux consécutifs peut offrir une étanchéité à l'air satisfaisante.

Dans un mode de réalisation, l'installation comprend une entrée d'air en amont de la voie basse et une entrée d'air en aval de la voie basse. Les entrées d'air amont et aval permettent une production de qualité, l'entrée d'air amont servant en début de production quand la zone aval est dépourvue de céréale, l'entrée d'air aval servant en fin de production quand la zone amont est dépourvue de céréale, les deux entrées d'air amont et aval servant entre le début et la fin de production quand la voie haute est chargée de l'amont à l'aval.

Dans un mode de réalisation, la chaîne comprend des barreaux en contact avec la grille dans la voie haute. Les barreaux tendent, lors de leur avancée, à entraîner la céréale. Il se produit un effet de brassage de la céréale.

Dans un mode de réalisation, ladite chaîne est mise en mouvement par un vérin linéaire et la vitesse de ladite chaîne est inférieure à 5 m/h, préférablement inférieure à 1 m/h. La faible vitesse de déplacement offre une usure extrêmement faible. La chaîne peut être entraînée par un actionneur linéaire à crémaillère et cliquet, le temps de retour de l'actionneur pendant lequel la chaîne est à l'arrêt étant négligeable par rapport aux durées des étapes de maltage. La malterie est donc globalement continue avec une discontinuité locale et temporellement négligeable du mouvement de la chaîne. L'actionneur linéaire peut être un vérin hydraulique ou électrique.

Dans un mode de réalisation, l'installation comprend un tunnel de germoir et un tunnel de touraillage parallèles. Préférablement, sont prévus une pluralité de tunnels de germoir et un tunnel de touraillage, par exemple quatre. Plusieurs installations similaires et standardisées peuvent être mises en œuvre au moins une comme germoir, au moins une comme touraille. En raison des durées différentes et des épaisseurs de lit de céréales différentes, il est préférable d'avoir au moins deux, voire trois, germoirs pour une touraille. La germination est un processus biologique nécessitant plusieurs jours à température et humidité contrôlées. Le touraillage consiste à arrêter définitivement la germination par élévation de température. La disposition en parallèle permet un accès aisé à hauteur d'homme et un encombrement faible.

Dans un mode de réalisation, l'installation comprend une unité de trempage en amont du tunnel de germoir, l'unité de trempage étant disposée perpendiculairement au tunnel de germoir, l'unité de trempage comprenant un bac à eau de forme tubulaire, un cylindre allongé disposé dans le bac à eau, et une vis disposée dans le cylindre, apte à faire avancer le grain en cours de trempage. Le trempage peut être installé dans la largeur du germoir. Le trempage est également en continu.

De façon générale, une telle installation comporte au moins les éléments suivants :
- une unité de trempage pour humidifier le grain et permettre un démarrage de la germination,
- au moins un germoir pour réaliser une opération de germination du grain trempé,
- au moins une touraille pour mettre fin à la germination du malt vert, et
- un système de transport de la céréale de l'un à l'autre.

L'invention vise également un procédé de malterie en continu, mettant en œuvre un tunnel de germoir ou de touraillage, dans lequel :
- le malt est déplacé dans une voie haute d'un tunnel comprenant une voie basse et une voie haute superposées, par une chaîne d'entraînement du malt entraînant le malt en translation dans la voie haute, le malt et la chaîne d'entraînement reposant sur une grille à ouvertures allongées, séparative de la voie basse et la voie haute,
- la chaîne retourne par la voie basse,
- de l'air est amené par la voie basse, traverse vers la grille et pénètre dans la voie haute,
- des sous produits tombent par les ouvertures de la grille et sont évacués entraînés par le retour de chaîne en sens opposé au sens d'entraînement du malt,
- et l'amenée d'air est sectionnée par un panneau amovible monté dans la voie basse au dessus du retour de chaîne.

On peut ainsi assurer la germination et le touraillage en continu à basse vitesse tout en pouvant régler les paramètres de germination et de touraillage, notamment température, durée, débit de ventilation, pour obtenir en sortie un malt de propriétés choisies.

Les conditions opératoires sont strictes. Les températures, les temps d'exposition et l'hygiène alimentaire doivent être respectées faute de quoi le malt est dégradé vers l'alimentation animale.

Le développement naturel de germination d'une céréale est mis à profit pour que celle-ci développe certains enzymes (notamment l'amylase, la protéase). Comme céréale, on utilise généralement de l'orge, ou encore du seigle, du blé, du sorgho, du teff ou de l'épeautre.

D'autres caractéristiques et avantages de l'invention apparaîtront à l'examen de la description détaillée ci-après, et des dessins annexés, sur lesquels :
- la figure 1 est, en vue de dessus, un schéma d'implantation pour un mode de réalisation d'une malterie,
- la figure 2 est, en vue de côté, un schéma de principe de l'implantation des germoirs,
- la figure 3 est, en coupe transversale, un schéma d'implantation pour un mode de réalisation d'une installation de touraille ou de germoir,
- la figure 4 est, en vue de côté, un schéma d'implantation pour un mode de réalisation d'une installation de germoir,
- la figure 5 est, en vue de côté, un schéma d'implantation pour un mode de réalisation d'une installation de touraille,
- la figure 6 est, en coupe longitudinale, un schéma d'implantation pour un mode de réalisation d'une installation de touraille, et
- la figure 7 est, en perspective, un schéma d'implantation pour un mode de réalisation d'un panneau de sectionnement.

Les dessins annexés pourront non seulement servir à compléter l'invention, mais aussi contribuer à sa définition, le cas échéant.

Il est fait référence aux ouvrages "Malterie et brasserie" et/ou "La Fabrication de la bière", déjà cités, pour acquérir au besoin une vue générale des installations de malterie.

Le processus de maltage comprend au moins les étapes suivantes:
a) Un trempage des grains. Celui-ci peut se faire dans différentes sortes de cuves de trempage.
b) La germination, qui s'effectue dans des germoirs. Après cette étape le grain de céréale est qualifié de malt vert.
c) Le touraillage, qui est un séchage sur grille en faisant traverser un lit de grains par de l'air chaud. Après cette étape l'orge est qualifiée de malt.
d) Le dégermage, qui consiste à éliminer les radicelles de l'orge.

On donnera maintenant quelques indications générales typiques sur ces différentes étapes. Les grains de céréale sont tout d'abord soigneusement nettoyés. Le but principal du trempage est de porter le grain à une teneur en eau proche de 50 %, typiquement entre 40 et 45 %. Il est bon aussi de lui apporter de l'oxygène, de sorte que la germination soit tout juste initiée ou sur le point de l'être en sortie de trempage.

On utilise la trempe alternée ou discontinue, avec des alternances de périodes pendant lesquelles le grain est sous l'eau, et d'autres (de durée environ moitié) où le grain est à découvert.

La température de l'eau est typiquement de 12 à 15°C, voir 20°C avec alternance d'eau froide. Le maximum est autour de 35°C, où le grain risque de mourir. Différents additifs peuvent être prévus pour empêcher la fermentation et le développement de micro-organismes pendant le trempage.

La germination se fait en plaçant un lit de grains trempés sur une grille fine, traversée par un flux d'air sous température, pression et humidité contrôlées.

Le touraillage s'effectue sur une grille traversée par de l'air chaud, également sous température, pression et humidité contrôlées, sur laquelle les grains sont posés. Il s'agit de les faire sécher pour stopper la germination, tout en gardant le mieux possible les propriétés désirées du malt. Le temps de séjour des grains est également contrôlé. Comme son nom l'indique, le touraillage connu s'effectue sur une plate-forme circulaire. Selon l'invention, le touraillage est linéaire ou longitudinal et continu.

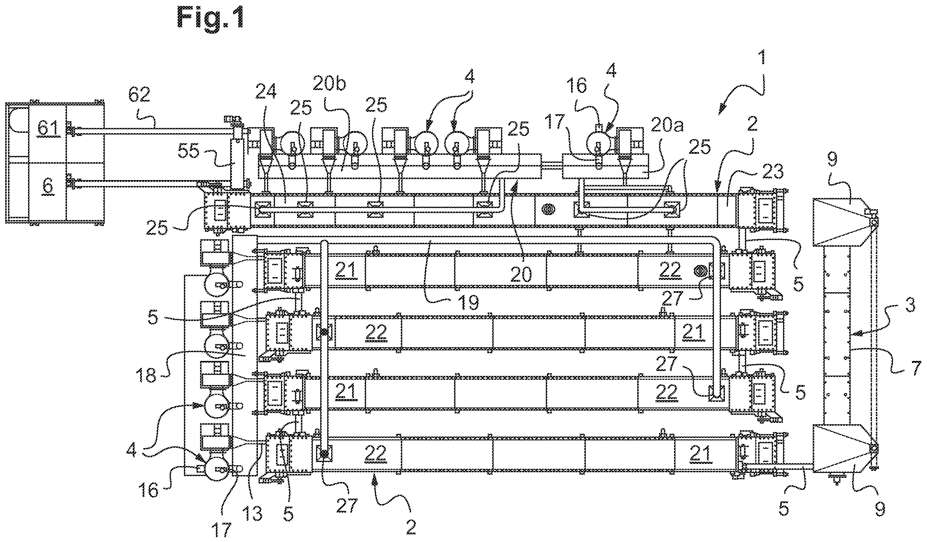

Sur la figure 1, une malterie 1 comprend cinq installations à tunnel 2. Quatre de ces installations 2 sont des germoirs disposés en série. L'une de ces installations est une touraille disposée en aval. Les installations à tunnel 2 sont parallèles. Les cinq installations à tunnel 2 ont en commun leur structure, notamment leur largeur, et la plupart de leurs composants. Avec un germoir de largeur plus élevée que la touraille, un germoir unique associé à une touraille unique est possible.

La malterie 1 comprend un outil de trempage 3 en amont des germoirs. L'outil de trempage 3 est perpendiculaire aux installations à tunnel 2. L'outil de trempage 3 est monté en tête des germoirs. La malterie 1 comprend des ventilateurs 4. Les ventilateurs 4 sont répartis à raison de un pour chaque germoir et plusieurs, ici cinq, pour la touraille. Des transporteurs 5, notamment des convoyeurs à vis, sont disposés entre les outils principaux pour le transport de la céréale. Un silo de stockage 6 est installé en aval de la touraille pour le malt.

L'outil de trempage 3 comprend un bac 7 et des cylindres 8 de révolution allongés parallèles disposés dans le bac 7. Le bac 7 est en forme de parallélépipède rectangle. L'outil de trempage 3 comprend une hotte d'alimentation 9 en céréale au dessus du bac 7, ici une hotte d'alimentation 9 à chaque extrémité, et des transporteurs de remplissage 10 des hottes d'alimentation, par exemple en provenance d'un camion de livraison.

Une alimentation en eau permet de commander le niveau d'eau dans le bac 7 et donc l'ennoyage et le dénoyage de la céréale. Les cylindres 8 sont ici au nombre de deux. Les cylindres 8 sont réalisés en fil métallique, de préférence à section triangulaire de base orientée vers l'intérieur et de sommet orienté vers l'extérieur. Les fils sont longitudinaux. Les fils sont reliés par des cercles de maintien.

A l'intérieur de chaque cylindre 8 est montée une vis 11 en hélice. La vis 11 et le cylindre 8 sont l'un fixe et l'autre rotatif de manière que la rotation fasse avancer la céréale de l'amont vers l'aval du cylindre 8. Ici, la vis 11 est rotative et le cylindre 8 est stationnaire. La vis 11 peut être à âme pleine. De préférence, la vis 11 vient en contact, voire en appui, sur le cylindre 8. La vis 11 est entraînée à une vitesse de rotation comprise entre 1 et 10 tours par heure. L'avancement par tour peut être compris entre 100 et 600 mm. Le diamètre intérieur du cylindre 8 est compris entre 150 et 600 mm. La rotation peut être assurée par un vérin linéaire associé à une roue libre.

De préférence, la vis 11 est creuse et comporte un canal d'air. Le canal d'air débouche dans une pluralité d'orifices de la vis 11 de manière qu'une injection d'air provoque un bullage dans l'eau du bac 7. Le bullage maintient un taux d'oxygène suffisant dans l'eau, par exemple de quelques ppm.

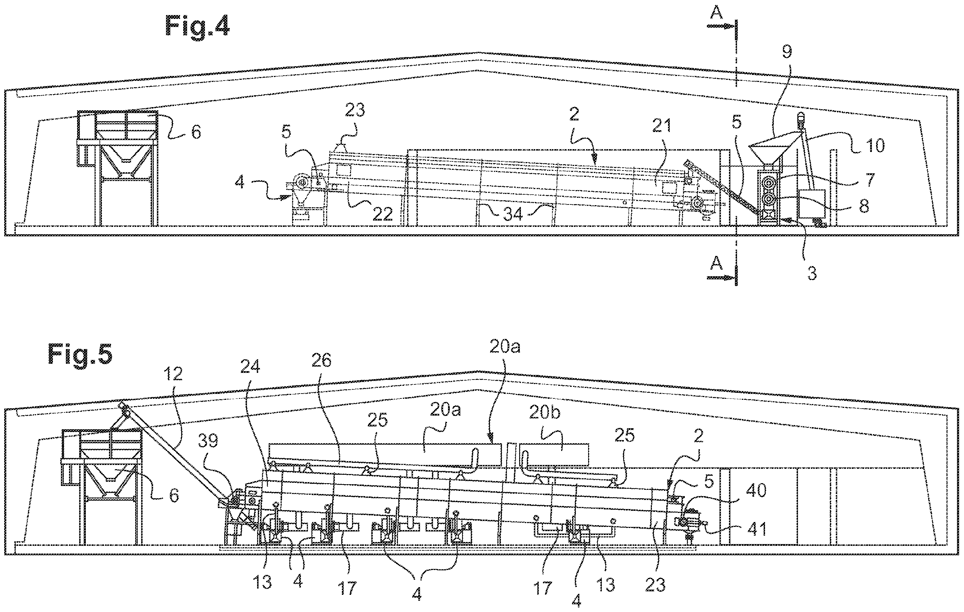

Dans le mode de réalisation illustré sur la figure 4, deux cylindres 8 sont montés, l'un au dessus de l'autre dans le bac 7. Le cylindre 8 supérieur reçoit la céréale en premier et la transfère à son extrémité aval au cylindre 8 inférieur monté tête-bêche. Toutefois, la hotte d'alimentation disposée en amont du cylindre 8 inférieur - aval du cylindre 8 supérieur - autorise l'utilisation d'un seul cylindre 8 pour certains types de céréales. Le cylindre 8 inférieur délivre la céréale trempée à un transporteur 5, notamment un transporteur-élévateur à vis, vers le premier germoir formé par une installation à tunnel 2.

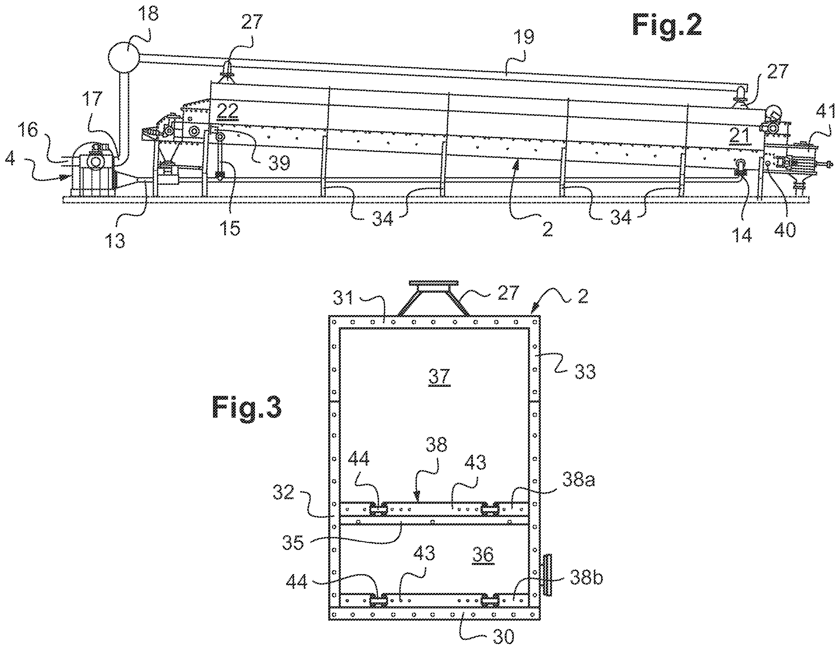

Dans le mode de réalisation illustré sur la figure 2, les germoirs présentent une inclinaison longitudinale. L'écoulement de l'eau est rapide vers l'amont. Les germoirs sont montés tête-bêche de sorte que l'aval 22 d'un germoir antérieur soit voisin de l'amont 21 du germoir suivant. Un transporteur 5 est monté entre lesdits aval 22 et amont 21 des deux germoirs pour le transfert de la céréale en cours de germination. L'aval 22 du dernier germoir est voisin de l'amont 23 de la touraille avec un transporteur 5 monté entre l'aval 22 du dernier germoir et l'amont 23 de la touraille pour le transfert de la céréale germée. Lesdits transporteurs 5 entre germoirs et entre germoir et touraille peuvent être des transporteurs à vis de faible longueur et sensiblement horizontaux. Lesdits transporteurs 5 sont mono-vis ou bi-vis, hélicoïdales ou à palettes.

Lesdits transporteurs 5 servent d'homogénéisateurs (mélangeurs) de la céréale, au stade de malt vert, entre deux tunnels, aussi bien entre deux germoirs et entre le dernier germoir et la touraille. Entre deux sous-étapes de germination dans un tunnel et entre la germination et le touraillage, la céréale est remuée par le passage dans le transporteur. La position d'un grain dans un tunnel est aléatoire par rapport à la position dudit grain dans tunnel précédent. On peut ainsi se passer d'un retourneur, habituel dans les grandes malteries. Un effet double est obtenu par les transporteurs 5. Le fait de sectionner l'étape de germination en plusieurs sous étapes au sein d'une pluralité de tunnels est mis à profit pour homogénéiser le lit de céréales.

En aval de la touraille est monté une dégermeuse 55. La dégermeuse 55 peut comprendre une grille cylindrique rotative au sein de laquelle le malt avance. La grille peut être munie d'une vis ou de palettes hélicoïdales d'avancement, notamment en mouvement relatif à la grille. La rotation de la grille provoque des déplacements du malt et au sein du malt se traduisant par des frottements arrachant les radicelles. Les radicelles tombent de la grille vers le bas d'un cylindre entourant la grille. La dégermeuse 55 peut extraire environ 80% des radicelles, les autres 20% ayant été extraits en amont au sein des installations à tunnel 2.

En aval de la grille de la dégermeuse 55 est monté un transporteur 12 vers le silo à malt 6. Un autre transporteur 62 est installé dans le bas du cylindre pour reprendre les radicelles et autres, et les convoyer vers un silo 61. Le silo 61 est adjacent au silo 6. Le silo 61 permet de récupérer et valoriser une large majorité des radicelles.

Après avoir exposé le cheminement de la céréale, le circuit d'air est maintenant présenté. La céréale trempée a besoin d'une température et d'une humidité contrôlées pour une bonne germination, en évitant la dessiccation comme le moisissement ou la prise en masse. Des ventilateurs 4 sont installés à l'extrémité des germoirs opposée à l'outil de trempage 3, à raison d'un ventilateur 4 par germoir. Chaque ventilateur 4 débite dans une conduite 13 pourvue de deux sorties 14, 15 dans le germoir correspondant, l'une amont et l'autre aval. Les sorties 14, 15 débouchent dans le bas du germoir. Chaque ventilateur 4 est pourvu de deux entrées, une entrée d'air froid 16 prélevé dans l'atmosphère ambiante et une entrée d'air chaud 17 provenant d'un chauffage d'air non représenté, par exemple une résistance électrique ou un brûleur à gaz, par l'intermédiaire d'un réservoir commun 18 s'étendant sur la largeur des germoirs. Le réservoir commun 18 est muni d'une sortie par ventilateur 4.

Une recirculation d'air de germoir est prévue. Chaque germoir comprend à son extrémité aval 22, en position haute, un avaleur 27 d'air relié à une conduite de recirculation 19, en partie commune entre les germoirs, débouchant dans le réservoir commun 18.

Le touraillage réclame des débit et température d'air plus élevés que la germination. Des ventilateurs 4 sont disposés sur un côté de la touraille opposé au dernier germoir. Les ventilateurs 4 sont ici au nombre de cinq. Les ventilateurs 4 sont espacés inégalement le long de la touraille. Les ventilateurs 4 sont progressivement plus serrés vers l'aval 24 de la touraille. Chaque ventilateur 4 débite de l'air en position basse dans une ou deux portions de la touraille disposée à faible distance par une conduite 13. Chaque ventilateur 4 est pourvu de deux entrées, une entrée d'air froid 16 prélevé dans l'atmosphère ambiante et une entrée d'air chaud 17 provenant d'un chauffage d'air non représenté, par exemple une résistance électrique ou un brûleur à gaz par l'intermédiaire d'au moins un réservoir 20. Ici, un réservoir amont 20a est prévu pour le ventilateur 4 amont et réservoir aval commun 20b est prévu pour les ventilateurs 4 avals. Le réservoir aval commun 20b est muni d'une sortie par ventilateur 4 aval.

Une recirculation d'air de touraille est prévue. Chaque portion de touraille comprend, en position haute, un avaleur d'air 25 relié à une conduite de recirculation 26 aval/amont. La conduite de recirculation aval est commune entre les ventilateurs 4 aval et débouchant dans le réservoir aval commun 20b. La conduite de recirculation amont est propre au ventilateur 4 amont et débouchant dans le réservoir amont 20a. La conduite de recirculation amont est alimentée par deux avaleurs d'air 25 de la portion amont 23 de la touraille. Les réservoirs amont 20a et aval 20b sont reliés par une conduite.

Les installations à tunnel 2 visibles sur les figures 1 à 4, sont montrées en coupe sur la figure 5. Ce que l'on voit sur la figure 5 est commun aux germoirs et à la touraille.

L'installation à tunnel 2 est de section rectangulaire et est étanche à l'air. Les parois inférieure 30, supérieure 31 et latérales 32, 33 peuvent être réalisées en tôle d'inox. La paroi supérieure 30 peut être monobloc avec une partie des parois latérales de façon à libérer un accès aisé à l'intérieur et au lit de céréale en cas de besoin. Des nervures ou bords pliés de renfort peuvent être prévus. Les parois peuvent être assemblées par vissage. Les parois sont isolées thermiquement au moins pour la touraille, de préférence pour la touraille et les germoirs. L'installation à tunnel 2 peut être réalisée par sections de 2 à 4 mètres de longueur. L'installation à tunnel 2 peut reposer sur des pieds 34. Chaque pied 34 peut supporter l'extrémité de deux sections adjacentes.

L'intérieur ou tunnel est divisé par une grille 35 en une voie basse 36 et une voie haute 37. La grille 35 est horizontale dans le plan de la coupe de la figure 3. La grille 35 est parallèle aux parois inférieure 30 et supérieure 31 dans le sens longitudinal.

La grille 35 est disposée entre 1/4 et 1/3 de la hauteur du tunnel. La grille 35 est réalisée en fil métallique soudé. Les fils peuvent être longitudinaux. Les fils peuvent être supportés par des traverses supportées par les parois latérales. Les fils forment une surface supérieure de grille 35.

L'installation à tunnel 2 comprend une chaîne 38 fermée de déplacement de la céréale. La chaîne 38 comprend une partie d'entraînement 38a montée dans la voie haute 37 et une partie de retour 38b également dénommée retour de chaîne 38. La partie d'entraînement 38a est déplacée vers l'aval et la partie de retour 38b est déplacée vers l'amont. La chaîne 38 tourne autour d'axes de renvoi disposés en extrémités de l'installation à tunnel 2. L'axe de renvoi aval 39 est entraîné en rotation. L'axe de renvoi amont 40 est muni d'un tendeur de chaîne 41. L'entraînement en rotation est assuré par un vérin linéaire associé à une crémaillère à cliquet. La chaîne 38 est entraînée à une vitesse comprise entre 20 et 120 cm par heure. Dès lors le temps de retour du vérin, de quelques secondes, est négligeable.

Ladite chaîne 38 est mise en mouvement à une vitesse inférieure à 5 m/h, préférablement inférieure à 1 m/h. Les durées de germination et de touraillage sont respectées.

La chaîne 38 comprend deux rangées de maillons 44 et des barreaux 43 reliant les deux rangées de maillons 44. Les rangées de maillons 44 sont espacées latéralement. Les barreaux 43 s'étendent sur la largeur du tunnel. Les barreaux 43 sont montés à intervalles réguliers. Les barreaux 43 se présentent sous la forme d'une tige droite. Les barreaux 43 comprennent une surface inférieure glissant sur la grille 35 en voie haute 37 et sur la paroi inférieure en voie basse 36. Les barreaux 43 permettent de déplacer la céréale reposant sur la grille 35 en voie haute 37. Le déplacement permet de remuer la céréale.

A l'extrémité amont 21 de la voie haute 37, la céréale est amenée au dessus de la grille 35 par un transporteur 5. Une lame d'égalisation du lit de céréale peut être disposée pour répartir la céréale sur la largeur de la voie haute 37. Le lit de céréale présente ainsi une hauteur sensiblement constante permettant une ventilation homogène de la céréale. En voie haute 37, la céréale est entraînée par les barreaux 43. A l'extrémité aval de la voie haute 37, la céréale entraînée par les barreaux 43 tombe dans une goulotte 42 transversale dans laquelle est installée la vis du transporteur 5 vers l'installation à tunnel 2 aval. L'extrémité aval 22 de chaque installation à tunnel 2 est plus haute que l'extrémité amont 21, 23 de l'installation à tunnel suivante de sorte que le transporteur 5 à vis reprenant la céréale à un niveau inférieur au niveau de la grille 35 l'amène au dessus de la grille 35 de l'installation à tunnel 2 suivante. Le transporteur 5 entre deux installations à tunnel 2 peut être de faible longueur et sensiblement horizontal. La grille 35 se trouve en montée de l'amont 21, 23 vers l'aval 22, 24. La pente est faible en raison de la longueur d'une installation à tunnel 2, en général supérieure à dix mètres.

Outre la ventilation ascendante, la grille 35 de chaque installation à tunnel 2 permet une circulation descendante d'un éventuel excès d'eau, par exemple un égouttage en début de premier germoir, et une circulation descendante de débris ou de sous produits de la céréale, notamment de radicelles. Les radicelles se développent naturellement au cours de la germination. Le taux de radicelles dans le malt fini est le plus faible possible pour cause de risque d'altération du goût. L'opération de dégermage est souhaitable pour la qualité du malt.

Le frottement de la céréale sur la grille 35 et les parois latérales 32, 33, sur les barreaux 43, sur les organes des transporteurs 5 intermédiaires, et le mouvement des grains entre eux tendent à arracher en partie les radicelles. Les radicelles peuvent traverser la grille 35 et tomber dans la voie basse 36. Les radicelles reposent alors sur la paroi inférieure 30 et sont entraînées par le retour de chaîne 38 en direction opposée à la direction de déplacement de la céréale au sein de l'installation à tunnel 2. La chaîne 38 est à double fonction d'entraînement de la céréale dans un sens et d'évacuation des radicelles dans le sens opposé. La malterie est à dégermage continu. Toutefois, plus la céréale est proche de l'état final de malt touraillé, plus les radicelles tombent. En pratique, la touraille aval voit tomber plus de radicelles que l'ensemble des installations à tunnel 2 situées en amont, ici quatre germoirs. Les radicelles parvenues à l'extrémité de l'installation à tunnel 2, aval pour les radicelles correspondant à l'amont pour les céréales, sont enlevées. L'enlèvement des radicelles peut être effectué par l'eau de lavage. Le volume d'eau de lavage peut être adapté au volume de radicelles à évacuer dans chaque installation à tunnel 2.

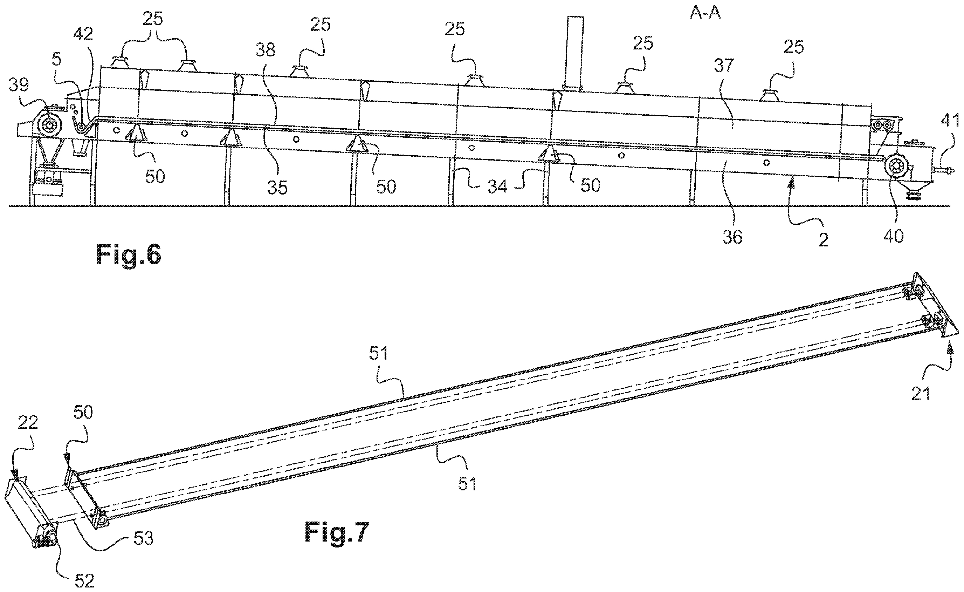

Comme illustré sur la figure 6, la voie basse 36 de l'installation à tunnel 2, ici la touraille, est munie de plusieurs panneaux de sectionnement 50. Les panneaux de sectionnement 50 sont amovibles. Les panneaux de sectionnement 50 sont montés stationnaires. Les panneaux de sectionnement 50 sont montés sous la grille 35 ou sur les parois latérales 32, 33. Les panneaux de sectionnement 50 sont montés à des emplacements prédéfinis munis d'organes de support. Les panneaux de sectionnement 50 forment des barrières à l'écoulement de l'air dans la voie basse 36. Les panneaux de sectionnement 50 définissent des sections de touraille aptes à recevoir une ventilation de débit et température individualisés. Lesdites sections de touraille peuvent être alimentées par un ventilateur 4. Chaque ventilateur 4 peut être associé à des vannes commandées sur l'entrée d'air froid et sur l'entrée d'air chaud pour obtenir une température de consigne.

Dans le mode de réalisation illustré sur la figure 6, quatre panneaux de sectionnement 50 sont montés définissant des sections de longueurs s'amenuisant vers l'aval. Chaque panneau de sectionnement occupe l'espace entre la surface supérieure des barreaux 43 de la chaîne 38 de retour et la surface inférieure de la grille 35 dans le sens de la hauteur, et entre les deux parois latérales dans le sens de la largeur. Dans le sens de la longueur, chaque panneau de sectionnement 50 occupe un espace supérieur à l'écartement entre deux barreaux 43. Ainsi, quelle que soit la position relative de la chaîne 38 de retour et du panneau de sectionnement 50, le panneau de sectionnement 50 est au dessus d'au moins un barreau 43. La circulation d'air est interrompue de manière ponctuelle le long de la voie basse 36.

En vue en coupe transversale, le panneau de sectionnement 50 présente une section triangulaire avec une base en regard des barreaux 43 et un sommet en contact avec la grille 35. La ventilation est assurée sous la grille 35 tout en étant sectionnée sur une longueur négligeable. De plus, les radicelles et autres tombant de la grille 35 au dessus d'un panneau de sectionnement 50, glissent sur le panneau de sectionnement 50 et tombant entre deux barreaux 43 de la chaîne 38 de retour sont évacuées.

Dans les germoirs, la Demanderesse propose un sectionnement différent. En raison de la ventilation plus faible, le cas général est une voie basse 36 de germoir à écoulement d'air continu. Toutefois, en début de production, le lit de céréale occupe une partie amont de la longueur de la grille 35 allant croissant et l'autre partie aval de la grille 35 est libre. On installe un panneau de sectionnement 50 mobile accompagnant l'avancement du front du lit de céréale. Ledit panneau de sectionnement 50 mobile est disposé en voie basse 36. Ledit panneau de sectionnement 50 mobile repose sur des rails montés sur les parois latérales 32, 33. Les rails sont longitudinaux pour une course du panneau de sectionnement 50 sur la longueur de la voie basse 36.

La figure 7 montre l'implantation d'un panneau de sectionnement, les autres éléments du tunnel ont été omis afin de voir le panneau de sectionnement 50. Le long du tunnel et de chaque côté est monté un rail 51, par exemple sous la forme d'une cornière fixée à la paroi latérale du tunnel. Le panneau de sectionnement 50 repose sur les rails par des paires de roues. Les roues peuvent être à mentonnet ou à gorge pour conserver le parallélisme avec les rails 51.

Ledit panneau de sectionnement 50 est tiré par un treuil 52 monté au voisinage de la goulotte 42. Une chaîne 53 est disposée entre le treuil 52 et le panneau de sectionnement 50. Le treuil 52 est synchronisé sur l'avancement de la partie d'entraînement 38a de la chaîne 38. La chaîne 53 est fixée au panneau de sectionnement 50. La chaîne 53 engrène sur le treuil 52. La chaîne 53 est renvoyée par un pignon de renvoi à l'amont 21, 23. Le treuil 52 est monté à l'aval 22, 24.

Ledit panneau de sectionnement 50 présente une dimension dans le sens de l'avancement supérieure à l'écart entre deux barreaux 43 de la partie de retour 38b de la chaîne 38. Ainsi, l'air est empêché de s'échapper sous le panneau de sectionnement 50 alors que la partie de retour 38b se déplace en direction opposée à la direction de déplacement du panneau de sectionnement 50. Ledit panneau de sectionnement 50 peut être muni de bavettes en polyuréthane en contact avec les côtés du tunnel, avec les barreaux 43 et avec la face inférieure de la grille 35.

Ledit panneau de sectionnement 50 mobile obture la voie basse 36 sur le front du lit de céréale. L'air insufflé en voie basse 36 par la sortie amont 14 est forcé de traverser le lit de céréale pour s'échapper par la sortie d'air. Lorsque la grille 35 est entièrement occupée par la céréale, le germoir est plein et la sortie aval 15 est ouverte. Ledit panneau de sectionnement 50 mobile est mis à l'arrêt.

En fin de production, le lit de céréale occupe une partie aval de la longueur de la grille 35 allant décroissant et l'autre partie amont de la grille 35 est libre. On positionne le panneau de sectionnement 50 mobile en accompagnement de l'avancement de l'arrière du lit de céréale. Ledit panneau de sectionnement 50 mobile obture la voie basse 36 sur l'arrière du lit de céréale. L'air insufflé en voie basse 36 par la sortie aval 15 est forcé de traverser le lit de céréale pour s'échapper par la sortie d'air. Lorsque la grille 35 est entièrement libre, le germoir est vide et la ventilation mise à l'arrêt.

Des buses de lavage sont montées sur le panneau de sectionnement 50 mobile servant alors de chariot de lavage pour la voie basse. Les buses de lavage sont alimentées par un tuyau souple. Les buses de lavage sont agencées pour laver la voie basse ainsi que le dessous de la grille 35.

Dans une alternative, un panneau de sectionnement mobile est présent en voie haute 37. Le panneau de sectionnement mobile est fixé temporairement à la chaîne 38 et obture la voie haute 37 sur le front du lit de céréale. Un évent situé côté amont de la voie haute 37 est ouvert et la sortie d'air normale est fermée. L'air insufflé en voie basse 36 par les sorties 14, 15 est forcé de traverser le lit de céréale pour s'échapper par l'évent. Lorsque la grille 35 est entièrement couverte par le lit de céréale, le panneau de sectionnement 50 mobile est en fin de course vers l'aval, la sortie d'air normale est ouverte et l'évent est fermé.

De manière générale, les surfaces en contact avec la céréale sont de qualité alimentaire.

Ainsi, un procédé de malterie en continu comprend :
- La céréale est trempée dans un outil de trempage rotatif, optionnellement perpendiculaire au germoir et à la touraille,
- La céréale humide est amenée dans un tunnel de germination et déplacée en un mouvement de translation globalement continu, par une chaîne d'entraînement, la céréale en cours de germination et la chaîne d'entraînement reposant sur une grille à ouvertures allongées, avec ventilation par le dessous, traversant la grille et la céréale en cours de germination, et la chaîne retourne par le dessous de la grille, et entraîne des sous produits tombés par les ouvertures de la grille, et évacués en sens opposé au sens d'entraînement de la céréale humide,
- De l'aval du tunnel de germination, la céréale germée ou malt vert est amenée dans un tunnel de touraillage et déplacée en un mouvement de translation globalement continu, par une chaîne d'entraînement, la céréale en cours de touraillage et la chaîne d'entraînement reposant sur une grille à ouvertures allongées, avec ventilation par le dessous, traversant la grille et la céréale en cours de germination, et la chaîne retourne par le dessous de la grille, et entraîne des sous produits tombés par les ouvertures de la grille, et évacués en sens opposé au sens d'entraînement de la céréale humide,
- Ladite étape de touraillage est répétée une pluralité de fois dans autant de tunnels de touraillage,
- De l'aval du tunnel de touraillage, le malt passe dans une dégermeuse ôtant les filaments développés à la germination.

Le traitement est continu par opposition à un traitement par lots de céréales. D'éventuelles opérations élémentaires discontinues de quelques secondes de durée peuvent avoir lieu. Néanmoins, la production horaire de malt peut être continue, c'est-à-dire constante d'une heure à une autre heure, aux tolérances habituelles près.

Dans un mode préféré, la ventilation est commandée longitudinalement par un panneau mobile monté sous la grille et au dessus du retour de chaîne, et accompagnant le déplacement de la céréale en début ou en fin de production.

## Revendications

1. Installation de malterie en continu, comprenant un tunnel (2) de germoir ou de touraillage, ledit tunnel (2) comprenant une voie basse (36) et une voie haute (37) superposées, une chaîne (38) d'entraînement du malt pour entraîner du malt en translation dans la voie haute (37), la voie basse (36) étant une voie de retour de chaîne (38), la voie basse (36) et la voie haute (37) étant séparées par une grille (35) à ouvertures allongées, la grille (35) supportant la chaîne (38) d'entraînement, la voie basse (36) formant une amenée d'air vers la voie haute (37) à travers la grille (35) et une évacuation de sous produits tombant par les ouvertures de la grille (35) et entraînés par le retour de chaîne (38) en sens opposé au sens d'entraînement du malt, et un panneau amovible de sectionnement (50) de l'amenée d'air monté dans la voie basse (36) au dessus du retour de chaîne (38).

2. Installation selon la revendication 1, dans laquelle le panneau de sectionnement (50) présente plusieurs emplacements fixes de montage.

3. Installation selon la revendication 1, dans laquelle le panneau de sectionnement (50) est mobile le long de la voie basse (36), le panneau de sectionnement (50) étant apte à suivre un début, respectivement une fin, de production de malt.

4. Installation selon l'une des revendications précédentes, comprenant des buses de lavage disposées sur le panneau de sectionnement (50).

5. Installation selon l'une des revendications précédentes, dans laquelle le panneau présente une section triangulaire en coupe dans un plan longitudinal avec un sommet de triangle adjacent à la grille (35) et une base de triangle adjacent au retour de chaîne (38) et de longueur supérieure à la distance entre deux barreaux (43) de la chaîne (38).

6. Installation selon l'une des revendications précédentes, comprenant une entrée d'air en amont de la voie basse (36) et une entrée d'air en aval de la voie basse (36).

7. Installation selon l'une des revendications précédentes, dans laquelle la chaîne (38) comprend des barreaux (43) en contact avec la grille (35) dans la voie haute (37).

8. Installation selon l'une des revendications précédentes, dans laquelle ladite chaîne (38) est mise en mouvement par un vérin linéaire et la vitesse de ladite chaîne (38) est inférieure à 5 m/h, préférablement inférieure à 1 m/h.

9. Installation selon l'une des revendications précédentes, comprenant un tunnel (2) de germoir et un tunnel (2) de touraillage parallèles, préférablement une pluralité de tunnels de germoir et un tunnel de touraillage.

10. Installation selon l'une des revendications précédentes, comprenant une unité de trempage (3) en amont du tunnel (2) de germoir, l'unité de trempage (3) étant disposée perpendiculairement au tunnel (2) de germoir, l'unité de trempage (3) comprenant un bac à eau de forme tubulaire, un cylindre (8) allongé disposé dans le bac à eau, et une vis disposée dans le cylindre (8), apte à faire avancer le grain en cours de trempage.

11. Procédé de malterie en continu, mettant en œuvre un tunnel (2) de germoir ou de touraillage, dans lequel :
- le malt est déplacé dans une voie haute (37) d'un tunnel (2) comprenant une voie basse (36) et une voie haute (37) superposées, par une chaîne (38) d'entraînement du malt entraînant le malt en translation dans la voie haute (37), le malt et la chaîne (38) d'entraînement reposant sur une grille (35) à ouvertures allongées, séparative de la voie basse (36) et la voie haute (37),
- la chaîne (38) retourne par la voie basse (36),
- de l'air est amené par la voie basse (36), traverse vers la grille (35) et pénètre dans la voie haute (37),
- des sous produits tombent par les ouvertures de la grille (35) et sont évacués entraînés par le retour de chaîne (38) en sens opposé au sens d'entraînement du malt,
- et l'amenée d'air est sectionnée par un panneau amovible (50) monté dans la voie basse (36) au dessus du retour de chaîne (38).

## Patentansprüche

1. Installation zum kontinuierlichen Mälzen, umfassend einen Keim- oder Darrtunnel (2), wobei der Tunnel (2) einen unteren Kanal (36) und einen oberen Kanal (37) umfasst, übereinander angeordnet, eine Malzantriebskette (38) zum translatorischen Antreiben des Malzes in dem oberen Kanal (37), wobei der untere Kanal (36) ein Kettenrücklaufkanal (38) ist, wobei der untere Kanal (36) und der obere Kanal (37) durch ein Gitter (35) mit länglichen Öffnungen getrennt sind, wobei das Gitter (35) die Antriebskette (38) stützt, wobei der untere Kanal (36) eine Luftzuführung zum oberen Kanal (37) bildet durch das Gitter (35) und eine Evakuierung von Nebenprodukten, durch die Öffnungen des Gitters (35) fallend und angetrieben durch den Rücklauf der Kette (38) in die entgegengesetzte Richtung zu der Malzantriebsrichtung, und eine abnehmbare Trennplatte (50) der Luftzuführung, montiert in dem unteren Kanal (36) oberhalb des Rücklaufs der Kette (38).

2. Installation nach Anspruch 1, in welcher die Trennplatte (50) mehrere feste Montagestellen aufweist.

3. Installation nach Anspruch 1, in welcher die Trennplatte (50) entlang dem unteren Kanal (36) mobil ist, wobei die Trennplatte (50) fähig, einem Anfang beziehungsweise einem Ende der Malzproduktion zu folgen.

4. Installation nach einem der vorhergehenden Ansprüche, umfassend Spüldüsen, bereitgestellt auf der Trennplatte (50).

5. Installation nach einem der vorhergehenden Ansprüche, in welcher die Platte eine dreieckige Schnittfläche aufweist in einer Längsebene mit einer Dreiecksspitze angrenzend an das Gitter (35) und einer Dreiecksbasis angrenzend an den Rücklauf der Kette (38) und von einer größeren Länge als der Abstand zwischen zwei Stäben (43) der Kette (38).

6. Installation nach einem der vorhergehenden Ansprüche, umfassend einen Lufteinlass vor dem unteren Kanal (36) und einen Lufteinlass nach dem unteren Kanal (36) .

7. Installation nach einem der vorhergehenden Ansprüche, in welchem die Kette (38) Stäbe (43) umfasst in Kontakt mit dem Gitter (35) in dem oberen Kanal (37) .

8. Installation nach einem der vorhergehenden Ansprüche, in welcher die Kette (38) durch einen linearen Zylinder in Bewegung gesetzt wird und die Geschwindigkeit der Kette (38) geringer ist als 5 m/h, bevorzugt geringer als 1 m/h.

9. Installation nach einem der vorhergehenden Ansprüche, umfassend einen Keimtunnel (2) und einen Darrtunnel (2), parallel zueinander, bevorzugt eine Vielzahl von Keimtunneln und einen Darrtunnel.

10. Installation nach einem der vorhergehenden Ansprüche, umfassend eine Eintaucheinheit (3) vor dem Keimtunnel (2), wobei die Eintaucheinheit (3) senkrecht zu dem Keimtunnel (2) bereitgestellt ist, wobei die Eintaucheinheit (3) einen röhrenförmigen Wasserbehälter, einen verlängerten Zylinder (8), bereitgestellt in dem Wasserbehälter, und eine Schnecke, bereitgestellt in dem Zylinder (8), umfasst, fähig, das Getreide während des Eintauchens voranzuschieben.

11. Verfahren zum kontinuierlichen Malzen, einen Keim- oder Darrtunnel (2) in Betrieb setzend, in welchem:
- das Malz in einem oberen Kanal (37) eines Tunnels (2) bewegt wird, einen unteren Kanal (36) und einen oberen Kanal (37) umfassend, übereinander angeordnet, durch eine Malzantriebskette (38), das Malz translatorisch in dem oberen Kanal (37) antreibend, wobei das Malz und die Antriebskette (38) auf einem Gitter (35) mit länglichen Öffnungen ruhen, den unteren Kanal (36) und den oberen Kanal (37) trennend,
- die Kette (38) über den unteren Kanal (36) zurückläuft,
- Luft über den unteren Kanal (36) zugeführt wird, zu dem Gitter hin (35) durchdringt und in den oberen Kanal (37) eindringt,
- Nebenprodukte durch die Öffnungen des Gitters (35) fallen und durch den Rücklauf der Kette (38) in die entgegengesetzte Richtung des Malzantriebs angetrieben evakuiert werden,
- und die Luftzuführung durch eine abnehmbare Platte (50) getrennt wird, montiert in dem unteren Kanal (36) oberhalb des Rücklaufs der Kette (38).

## Claims

1. Continuous malting plant, comprising a germinating or kiln drying tunnel (2), said tunnel (2) comprising a superposed low route (36) and high route (37), a malt driving chain (38) for driving the malt in translation in the high route (37), the low route (36) being a chain return route (38), the low route (36) and the high route (37) being separated by a grating (35) with elongate openings, the grating (35) supporting the driving chain (38), the low route (36) forming an air supply to the high route (37) through the grating (35) and an evacuation of by-products that fall through the openings in the grating (35) and are driven by the chain return (38) in the opposite direction to the driving direction of the malt, and a removable panel (50) for cutting off the air supply mounted in the low route (36) above the chain return (38).

2. Plant according to claim 1, wherein the cutting-off panel (50) has several fixed mounting positions.

3. Plant according to claim 1, wherein the cutting-off panel (50) is movable along the low route (36), the cutting-off panel (50) being capable of following a start, respectively an end, of malt production.

4. Plant according to one of the preceding claims, comprising washing nozzles disposed on the cutting-off panel (50).

5. Plant according to one of the preceding claims, wherein the panel has a triangular cross-section along a longitudinal plane with a triangle apex adjacent to the grating (35) and a triangle base adjacent to the chain return (38) and of a length greater than the distance between two bars (43) of the chain (38).

6. Plant according to one of the preceding claims, comprising an air inlet upstream from the low route (36) and an air inlet downstream from the low route (36).

7. Plant according to one of the preceding claims, wherein the chain (38) comprises bars (43) in contact with the grating (35) in the high route (37).

8. Plant according to one of the preceding claims, wherein said chain (38) is set in motion by a linear cylinder and the speed of said chain (38) is less than 5 m/h, preferably less than 1 m/h.

9. Plant according to one of the preceding claims, comprising a germinating tunnel (2) and a kiln drying tunnel (2) that are parallel, preferably a plurality of germinating tunnels and a kiln drying tunnel.

10. Plant according to one of the preceding claims, comprising a steeping unit (3) upstream from the germinating tunnel (2), the steeping unit (3) being disposed perpendicularly to the germinating tunnel (2), the steeping unit (3) comprising a tubular-shaped water trough, an elongate cylinder (8) disposed in the water trough, and a screw disposed in the cylinder (8), capable of moving the grain forwards during steeping.

11. Continuous malting method, using a germinating or kiln drying tunnel (2), wherein:
- the malt is moved in a high route (37) of a tunnel (2) comprising a superposed low route (36) and high route (37), by a malt driving chain (38) for driving the malt in translation in the high route (37), the malt and the driving chain (38) resting on a grating (35) with elongate openings, separating the low route (38) and the high route (37),
- the chain (38) returns via the low route (36),
- air is supplied by the low route (36), passes through the grating (35) and enters the high route (37)
- by-products fall through the openings in the grating (35) and are evacuated driven by the chain return (38) in the opposite direction to the driving direction of the malt,
- and the air supply is cut off by a removable panel (50) mounted in the low route (36) above the chain return (38).
